# EUROPEAN PATENT APPLICATION

(11) **EP 1 298 539 A1**
(43) Date of publication of application: **02.04.2003**
(21) Application number: 01123606.4
(22) Date of filing: 01.10.2001
(51) Int. Cl.: G06F 17/30

(54) **Method and device for marking and filtering data elements in a database**

(71) Applicant: SUN MICROSYSTEMS, INC., Palo Alto, California 94303 (US)
(72) Inventor: Grobler, Dirk, 24534 Neumünster (DE); Janssen, Ocke, 20255 Hamburg (DE); Schönheit, Frank, 22047 Hamburg (DE)
(74) Representative: Becker Kurig Straus

(57) **Abstract**

The invention relates to the a method and a computer program for enabling a user to mark tables in a table structure of a database. The method utilizes marking in all hierarchic levels of a hierarchic table structure of a frontend of a database. The markings can be used to simplify the access of tables in databases with a great number of tables stored. The markings can be applied to all hierarchic levels of the table directory structure, to simplify the access in the upper hierarchic levels of the table directory structure. Additionally the marking in the lowest hierarchic level can be restricted to ensure that new and unmarked tables can perceived by the user.

## Description

### Field of the invention

This invention relates to database management systems. More specifically the invention relates to marking and selecting or filtering of elements in a database management system. Most specifically, the present invention relates to the subscription of users to elements in table structures of a database. The invention also relates to the filtering of database table structures by means of a database management system (DBMS).

### Description of the related art

Computerized databases nowadays form a common tool used in connection with computers and networks. Databases are valuable application programs running on computers and network devices which are used to store, manage and retrieve data, especially tables. They require suitable methods to maintain, retrieve and update the stored data. The stored data elements form the actual database, wherein - in case of relational databases - the data entries are in the form of a data array comprising tables arranged in columns and rows.

A database management system (DBMS) is a tool for accessing, editing, storing and querying the database tables. The DBMS uses relational algebra to logically connect the entries of the tables. The user accesses the tables to enter new data, delete old data or generate relations between different tables in the database. The user can access tables of a database by means of a DBMS. The DBMS offers the option to process the data stored in different tables e.g. the serial number of components required for a device along with the actual number of components in the stock, to generate e.g. an order to the manufacturer of the components.

To access the tables in the DBMS there is provided a frontend, a user interface or a suitably defined data source, e.g. a terminal having a screen, with a table structure containing the tables. In the directory structure the tables are usually stored in hierarchic orders. The hierarchic directories of conventional frontends for DBMS can be structured in catalogues, schemas and tables, at least in tables. The presence of catalogues and schemas depends on the respective DBMS. Usually, the user can access all database tables the administrator provides access rights to. In centralized databases of networks, the amount of stored tables, structures, and catalogs is so huge that the average user is not able to decide what data should be visible and what not.

To select a certain table a user may access a certain catalog, and a certain schema in the catalog and select a certain table in this sub-structure. This procedure is similar to searching in a folder of a wardrobe by first selecting a drawer in the wardrobe, then a file in the drawer and finally a folder in the directory. To simplify the access to certain tables a user can select a filter option for certain tables and hide the unfiltered tables. Such a conventional filter is described in the EP 1 109 116 A1: "Method for visually filtering a database" filed by the applicant.

In addition it is known that some frontend programs of DBMS offer the option to mark the tables on the lowest hierarchic level. The marking can be performed user-specifically so that the marks are only seen by the user who applied the mark. These conventional markings are static and newly entered tables are not shown because they are unmarked. With an option to hide unmarked tables the user can simplify the depiction of the table structure. The main drawback of this method is that the marks are static so that newly generated and unmarked tables are hidden and therefore cannot be displayed to the user.

Therefore a database management system is desirable in which there is an improved option to mark data elements and retrieve them for display which is adapted for a table structure of a database.

### Summary of the invention

According to one embodiment of the present invention a method for marking data elements in a database management system is provided, comprising the steps of receiving a request e.g. from an identified client device, said request requesting the transmission of database data, followed by retrieving the requested data and transferring them for display, e.g. to the client. Further, receiving data related markings, e.g. from the client, and storing them. This method represents a first marking procedure for database data, preferably in a server. The markings preferably can be stored in a server database, or in a separate memory. It is preferred to store the markings in an administration server to relate the identification data of the client or a user with the personal set of marking elements. It should be noted that the server may retrieve the requested data from other databases via a network. The data elements may be comprised of tables, hierarchic structures thereof or other relational data.

According to a second embodiment of the present invention a method for marking and e.g. retrieving data elements in a database management system is provided comprising the steps of receiving a request e.g. from an identified client device. Thereby the transmission of database data is requested. Next, retrieving said database data and receiving marking elements or data related markings, wherein these two steps may be exchanged, especially if the retrieving step requires the previous receipt of marking elements. Next, selecting or filtering certain data out of the retrieved data according to the received marking elements. Finally, the selected or filtered data are transferred for display, e.g. to a client device. Thereby the network benefits from a reduced amount of data to be transferred for display, as only marked or filtered database data are transferred via the network. The marking elements and the database data may be stored in separate memories, or on the same database. Preferably, when the server utilizes e.g. a relational database, the markings can be stored in client specific tables to simplify the association of marking elements and database data.
The marking elements may be stored in marking memories and may be received from said marking memories or from other input.

According to another embodiment of the present invention there is provided a method for marking and e.g. retrieving data elements, e.g. database data in a database management system comprising the steps of receiving a request e.g. from an identified client device. The data request requests a transmission of database data, e.g. to the client device. Next, retrieving the data, e.g. from a database, and receiving marking elements or data related markings, e.g. from a marking memory or from other input. The database may be incorporated into the computing device or the server, or can be an external database. The steps of retrieving the data and receiving the marking elements may be interchanged. It follows transferring said data and said marking elements to be transferred for display, e.g. to the client device. Preferably, the server transfers the requested data and the received marking elements to the client device. To relate the correct marking elements with the correct data and the correct client the server should be able to identify the client and the retrieved data. Therefore a marking memory may be provided in which the marking elements are preferably stored. Such marking memory may comprise code to relate the marking elements to the data and the client. To prevent an expanded marking memory, the server may update the marking memory to delete markings of deleted data or deleted clients. The transfer of data and marking elements may be performed successively.

According to a preferred embodiment of the present invention a method for marking data elements preferably in a database on a computer device by means of a database management system is provided. The method resides in receiving of a request to retrieve data from a database, and retrieving the data. A computer device may be provided to retrieve data from a database for display. Next, receiving a marking request, e.g. from a user, to apply marking elements or data related marking to the retrieved data, storing the applied marking elements and displaying the data in accordance with said marking elements. This method represents a marking operation of database data. An employed computer device for performing the steps can be e.g. a personal computer, a portable computer, a laptop, a palmtop, a personal digital assistant (PDA), a network terminal, or even a communication device with computing abilities. The database can be part of the computing device, or can be an external database, e.g. in a server connected to the computer device via a network.

According to yet another preferred embodiment of the present invention a method for marking data elements is provided which comprises the following steps residing in receiving a user input requesting to retrieve data from a database, retrieving the requested data from said database and receiving a marking request, said marking request ordering the retrieval of marking elements or data related markings, e.g. from a marking memory or other on-line input. Subsequently the retrieved data are displayed in accordance with the marking elements. Alternatively, the markings may be separately retrieved by a separate input, so that first the data are requested and second the markings are retrieved. This would encompass two input steps in the above method. It should further be noted that the user can change depicted markings by user request to add, change and delete markings, and these changes can be stored in the marking memory. To provide this feature the DBMS may be modified by a special button or a selectable menu.

In a another preferred embodiment of the present invention marked data elements are depicted for display. This selective depiction display is working as a filter for unmarked data. The information about the visibility can be stored in the marking memory, or in the database. Preferably the user can select the visibility by a DBMS input. To provide this feature the DBMS may comprise a button or a selectable menu.

According to yet another preferred embodiment of the present invention a method for marking data elements and e.g. retrieving the data in a database management system is provided. The marking elements may be stored in a marking memory or may be input differently e.g. on-line. The data may be stored in a database. This method resides in receiving a request to retrieve data e.g. from a database. Next, receiving or retrieving marking elements in order to preselect the data retrieval. Next, retrieving the data, e.g. from the database, in accordance with said marking elements which have been received or retrieved previously. Finally the preselected or filtered data are displayed. This method reduces the access to the database by pre-selecting the data to be retrieved by the markings.

According to another preferred embodiment of the present invention the above methods further comprise the processing of the marking elements or data related markings to propagate the marking elements or the association of the marking elements to other hierarchic marking or structure levels. The propagation of markings especially in table structures can help to simplify the access to these tables structures. Such propagation may include the extension of markings to higher and lower hierarchic level, respectively.

It should be noted that in the above methods, the marking elements and/or data can be retrieved from and stored in a database, e.g. of a server or of a connected computer device, via said network. The database can be an external database that can accessed by the server or the computer device via said network. So it is possible to even retrieve data from a remote database, and the marking elements from another memory, located even on different and remote servers or computing device spaced apart. Alternatively, the database and/or the marking memory can be located in the same computer device or server.

Preferably, the request for transmission of data is received from one of a client device, a server device, a computer device and a user, and said transfer of data and/ or marking elements is directed to one of a client device, a server device, a computer device and a user.

According to yet another embodiment of the present invention a software tool for enabling a user to mark elements in a database is provided. The software tool comprises program portions for carrying out the operations of the aforementioned related methods to mark elements, preferably in a database stored in a server when the software tool is implemented e.g. in a server computer program. Said software tool for enabling a user to mark elements in a database, comprising program code portions may be implemented in a computer device or client device computer program.

Yet another embodiment of the present invention is a computer program for enabling a user to mark elements in a database, preferably in a server. The computer program comprises program code means for carrying out the operations of the related aforementioned methods to mark elements in a server database when the program is run on said server. In another embodiment a computer program for enabling a user to mark elements in a database, comprising program code may be implemented on a computer device or client device.

According to another embodiment of the present invention, a computer program product is provided which comprises program code means stored on a computer readable medium for carrying out the aforementioned related methods when said program product is run on a server or on a computer or client device.

According to a further embodiment of the present invention an apparatus is provided for marking data elements in a database management system, comprising an interface for exchange of data, e.g. for communicating with at least one user and/or at least one memory and/or at least one database. Further, it comprises a module for receiving marking elements, and processing means in order to filter or pre-select said data in accordance with said marking elements or filters.

These elements may be provided to enable a server or whatever computing device to provide the functionality. The server may communicate with client devices and with databases via the network interface, and therefore the server does not require an own database to retrieve data. Additionally the server may comprise a database to store data. The server can be e.g. an administration server, which can be located e.g. in a local area network. The implementation of the server in an administration server includes the advantage that an administration server already comprises client related databases simplifying the association of identification data of a client with a respective marking memory.

Yet another preferred embodiment of the present invention resides in an apparatus which may be embodied as a computer device. This apparatus comprises in addition a communication interface, a database access means comprised therein, a marking memory to store received marking elements, a processing means and a display. The interface is adapted to communicate with a user, a memory and a database, respectively, e.g. by a keyboard, a trackball, a mouse and by wired connection. The access device is adapted to access data of a database. The marking memory stores marking elements, and related information, if required. The processing means serves to filter the data of a database in accordance with the respective marking elements.

The display is used to display said filtered data. The filter option can be a marking of the data but can be used to filter the data according to the markings. A simple filter would be e.g. to hide all unmarked elements. More complex filters may preselect the data according to a defined kind of marking, or even according to database meta data. The apparatus can further comprise a database located therein. With an internal database the apparatus can autonomously execute the marking operation described above without using a network resource or an external database.

A further embodiment of the present invention is a network system which enables a user to mark elements in a database. The network system comprises at least one apparatus and at least one database. Preferably the network comprises a server, a client device, a database, network interfaces, database access devices, marking memories, processors and at least one display. The server may comprise at least a further database, a network interface, a database access device and a processor. The client device serves as a user interface for receiving user input and comprises at least a display, a network interface, a database access device and a processor. The location of other elements in the network system is preferred. The server and/or the client device can comprise the storage mans to store marking elements. The client device may further comprise an internal database, too. In the network system, the interfaces are used to transfer data between the client device and the server. The database access devices may use software code sections for accessing the data of the database. The processors can be used to execute software to filter said data of said database in accordance with said marking elements, to access the database and to provide the communication between the server and the client device.

The markings can be used, e.g. to mark elements in a table structure of a database. The table structure comprises preferably two different elements; tables and containers, wherein the tables and/or containers are stored in containers or sub-containers. The user can arbitrarily mark the containers, sub-containers and tables of the table structure by applying markings.

Marks can be used to mark arbitrary element of the table structure. The table structure is e.g. a table directory provided in a frontend of an administration system in a client device. The marking can be e.g. a bold, colored, transparent, oblique, and/or dotted depiction of the table structure element. The marking can be executed e.g. by a checkbox, a menu, by key input and the like. In the simplest case the marking is made on a checkbox by deciding if the table structure element is marked or not.

In another embodiment of the invention does not only comprise markings for filter options, but can comprise markings for the user so that the user can mark e.g. the individual importance of a table or a container for the user himself. The individual user markings can be implemented as an additional feature of the frontend of the DBMS.

Conveniently, the method further comprises a retrieving operation of previously stored markings, and an operation to associate said markings with the containers and tables. This operation enables the user to retrieve previously stored markings, so the marking only has to be performed once.

Advantageously, the table structure to be marked comprises multiple hierarchic levels with tables in lower and/or lowest hierarchic levels and containers in the higher hierarchic levels. Containers in higher hierarchic levels can store sub-containers of lower hierarchic levels. To simplify the hierarchic table structure a container can, e.g. be a catalogue, a schema, a folder and the like, so that e.g. a folder contains tables, a schema can contain folders and catalogues contain schemas on different hierarchic levels. It is to be understood that the actual name of the container, sub-containers and the like is not essential for the hierarchic structure of the table structure. The number of hierarchic levels is not limited.

Advantageously, in another embodiment of the invention the markings from one hierarchic level are propagated to other hierarchic levels in the database by the DBMS. So e.g. the frontend of the database management system can mark elements in higher hierarchic levels automatically. The markings are generated automatically and the makings from the user may be different, so that a user can distinguish if the marking was applied by a user of by the frontend. If the frontend supports a checkbox option, the user can distinguish the markings by the checkbox. Preferably the automatically generated marking of a container can further contain information about the ratio of marked to unmarked elements in the container. This may be executed e.g. by a colored bar in the background of the element. The propagated makings can be used, to filter the table structure of the database by hiding unmarked elements e.g. unmarked tables and containers. Hiding operations may be performed on each hierarchic level separately or for the whole table structure. The hiding of the unmarked elements may be restricted e.g. in the lowest hierarchic level to ensure that new and/or unmarked tables are visible. Filtering and propagation of markings in the table structure are depicted in the figures.

Conveniently, the method further comprises a sorting operation of the elements in the table structure. The elements in all hierarchic levels of the table structure can be sorted according to a particular order, e.g. alphabetically, by the date of last access, table type and the like. The order of sorting can be inverted, e.g. alphabetical from Z to A. The sorting can be subdivided into a first row of marked elements and a second row of unmarked elements. The sorting can be subdivided into two rows wherein one row contains containers and the other row contains tables.

Advantageously, the method further comprises a user identification operation, and the access to the markings is only granted to an identified user. A user identification allows to use the method in a network, wherein each user can access and retrieve his personal set of markings. The user identification can be e.g. the standard user identification operation with a password for a computer, network, or database access.

Further features and advantages of the present invention will become apparent from the following detailed description of embodiments of the invention in connection with the accompanying drawings.

### Brief description of the drawings

Figure 1A and 1B depict block diagrams of a conventional table directory structure of a database management system (DBMS).
Figure 2A depicts a block diagram of a table directory structure of a DBMS according to one embodiment of the present invention.
Figures 2B to 2D depict a table structure according other embodiments of the invention having different markings, different filters and different propagation of the markings and the visibility thereof.
Figures 3A to 3D depict flowcharts for carrying out the method on an apparatus according to embodiments of the invention.
Figures 4A to 4D depict flowcharts for carrying out the method on another apparatus according to embodiments of the invention.
Figures 5A to 5C depict block diagrams of a server, a computer device, and a network system according to embodiments of the present invention.

### Detailed description of embodiments

In the description of the figures same reference numerals are used to refer to same elements in the drawings.

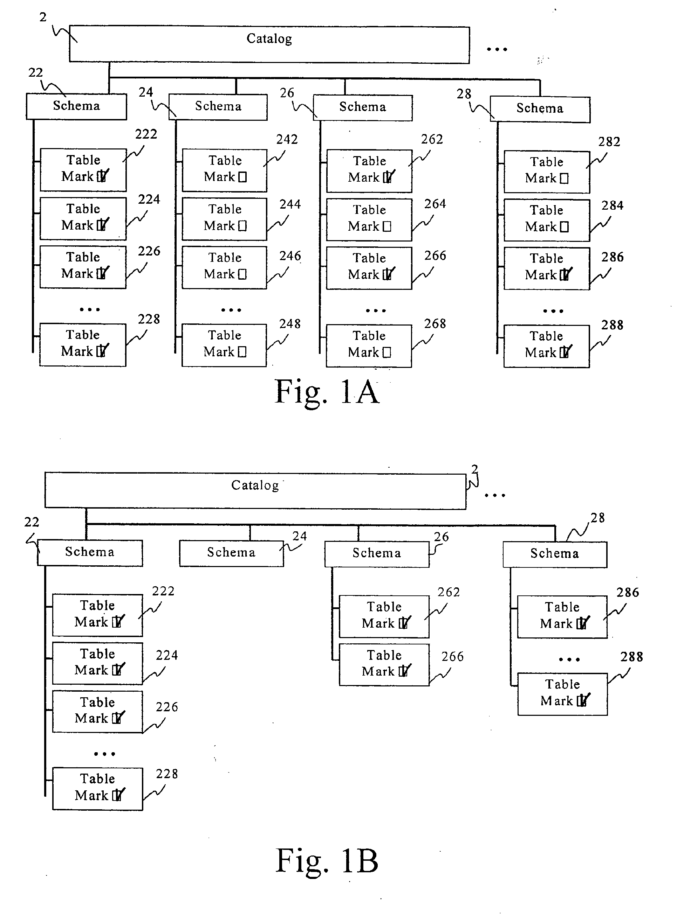

Figure 1A depicts a hierarchic table structure of a conventional user interaction system of a database management system. The table structure comprises containers (catalogue 2, and schemas 22, 24, 26, 28) and tables 222 to 288. The depicted table structure represents the whole table structure with all markings, irrespective of the actual illustration of the displayed user interface of a frontend of a DBMS. Catalogue 2 contains a number of N schemas 22, 24, 26, 28. There is only the catalogue 2 depicted in the directory structure to simplify the figure. Other catalogues may be present but are not shown for this purpose. The catalogue 2 contains N schemas 22, 24, 26, 28 which are all depicted. Each schema 22, 24, 26, 28 contains at least one of tables 222 to 288. Each table 222 to 288 comprises a checkbox to mark the tables 222 to 288. The user can use a filter to hide all unmarked tables 242, 244, 246, 248, 264, 268, 282, 284 in the directory structure.

Figure 1B depicts the table directory structure of Fig. 1A with filtered unmarked tables. The filter has filtered the directory structure and has hidden all unmarked tables. In case that a new table is generated, and the user uses the filter on the same table directory structure, a new unmarked table will be hidden, so that the user cannot perceive the presence of the new table. In the figure the tables 222 to 288 are named by reference numerals.

The hierarchic table directory structure can best be compared with a tree wherein the tables are represented by leaves, the schemas are represented by twigs and the catalogues are represented by branches. Higher hierarchic structures can be represented by boughs and trunks. In conventional table directory structures, the user can only mark the leaves of the tree, and not the twigs and branches. It can be imagined easily that it is very difficult to retrieve or mark single leaves in the tree and that it is impossible to find interesting new unmarked leaves in the huge amount of unmarked uninteresting leaves.

Figure 2A depicts a table directory structure according to an embodiment of the present invention. As in conventional table directory structures the depicted table structure comprises catalogues, schemas and tables 422 to 648 (squares). A container comprises catalogues 4, 6 (octagons) and schemas 42 to 64 (hexagons). The difference is that the user can mark the catalogues 4, 6, schemas 42 to 64 and tables 422 to 648 by activating a checkbox. Marked elements are displayed bold. This enables the user to perceive the marked table directory structure on the catalogue, schema and table level. And therefore, the user can decide on marking all visible directory elements simply and fast by marking catalogues 4, 6, schemas 42 to 64 and tables 422 to 648 and later activate a filter in order to hide all unmarked elements.

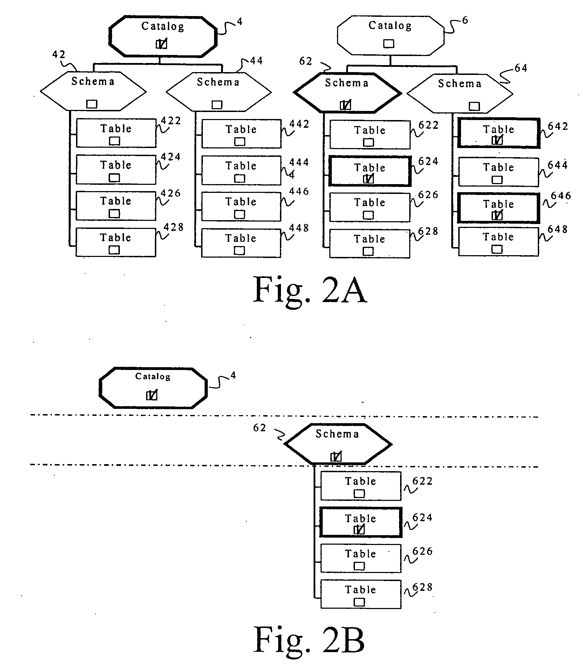

The Figure 2B depicts the table structure of figure 2A with an activated "hide unmarked elements" filter according to another embodiment of the present invention. The depicted filter differs from a filter for "hide unmarked elements" of figure 1B, as the lowest hierarchic level is not filtered. All tables beneath an unmarked schema are not displayed anyway. All tables beneath a marked schema are displayed without any filter thereof. Schemas and catalogues are only shown if marked. The main advantage is that if the user marks an element on the table level, new tables stay visible. So if a new table is added to schema 62, the user can see and access the new unmarked table even with an activated filter.

In the above mentioned tree analogon, it is like the user can mark twigs and branches, and higher hierarchic structures as boughs and trunks. New and unmarked leaves in the tree stay visible even with an activated filter. If the markings are combined with "hiding all unmarked twigs and branches", a whole tree can be reduced to a few branches, twigs and is therefore much clearer than a stack of leaves of the conventional table directory structure.

The Figure 2C depicts the same table structure as Fig. 2A having a propagating marking with another activated filter according to another embodiment of the present invention. The depicted filter differs from a filter for "hiding unmarked elements", as the next one step higher and lower hierarchic levels of marked elements are also marked and depicted too, increasing the clarity of the table structure. Alternatively the markings are propagated in the table structure to marking levels which are one hierarchic step higher or lower than the originally applied markings, and a simple "hide all unmarked elements-" filter can be applied, so that the filter information is coded fully in the markings. The main advantage is that if the user marks an element on the schema level, all tables 622 to 628 contained in the marked schema 62 get visible. So if a new table is added to schema 62 in catalogue 6, the user can see and access the new unmarked table 622, 626, 628 even with an activated filter. As catalogue 4 is marked, both schemas 42, 44 contained therein are marked and visible, so the user can mark schema 42, 44 to see the content of the respective schema 42, 44 by a single "mouseclick". Catalogue 6 is visible, because schema 62 of its lower hierarchic level is marked. The marking of schema 62 has the additional effect that all of the tables contained in the schema 62 are visible. To visualize the preferences of the user in the lowest hierarchic level, table 624 of schema 62 is marked. The marking of table 624 in schema 62 has no further effect on the marking and visibility of the other elements in the table structure. Finally in schema 64 of the catalogue 6 the tables 642 and 646 are marked. With the marked tables 642, 646 the corresponding schema 64 is visible too. The other tables of the schema 64 are hidden as the schema 64 itself is not marked, and the propagation of the visibility has no effects in the same hierarchic level.

In the above mentioned tree analogon, it is like the user can mark leaves, twigs and branches, and higher hierarchic structures as boughs and trunks. It is very easy to retrieve single leaves in a twig or a branch and it is easy to find interesting new unmarked leaves on a single twig with only a few unmarked uninteresting leaves. If the markings are combined with "hide all unmarked twigs and branches", a whole tree can be reduced to a few branches and twigs and is therefore much clearer than a stack of leaves of the conventional table directory structure.

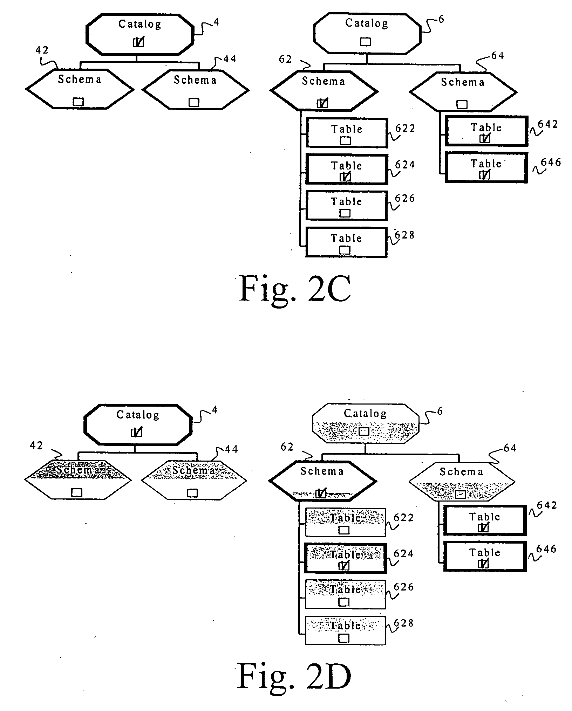

The Figure 2D depicts the same table structure with propagating markings and the same activated filter as in figure 2C. The difference to figure 2C is that the visibility and the markings are propagated to other hierarchic levels. If a user marks an element in the table structure the respective children and parents are marked too. On the left side catalogue 4 is marked and therefore is depicted bold, with the propagating visibility, both elements contained in catalogue 4 being visible. Additionally schema 42 and schema 44 are marked as children of a marked element with a gray upper part thereby marking half of the box with a gray color. The children 422 to 448 of both schemas 42, 44 are not visible and depicted as they and their parents are not marked. Catalogue 6 is not marked by the user, but visible as one of its children 62, 64 is marked. Half of the catalogue 6 is marked by a propagating mark (the gray level in the background is in the lower half of the box) indicating that half of its children 62, 64 are marked. Schema 62 of catalogue 6 is marked. A quarter of the schema 62 is marked by a propagating mark (the gray level in the background) indicating that a quarter of its children 622 to 628 is marked. The tables 622 to 628 of schema 62 are visible and marked by a propagating mark. Additionally, table 624 is marked by the user and therefore depicted bold. Schema 64 of catalogue 6 is visible as two of its children 642, 646 are marked, half of the schema 64 being marked by a propagating mark (the gray level in the background) indicating that half of its children 642 to 648 are marked. The table 642, 646 of schema 64 are visible as they are marked. The tables 644, 648 are not visible as they are not marked and their parent container, schema 64 is not marked by the user, too.

In the above mentioned tree analogon, it is like that leaves, twigs and branches indicate how many of the elements of its adjacent hierarchic levels are marked. This option can easily indicate how many unmarked elements can be expected within a container without the necessity to mark or open a container. The propagating mark can be all kind of diagrammatic indication such as a pie chart, a level chart, a color intensity, a depiction of the number of marked and unmarked elements, and the like. The present invention is not restricted to bold depiction of user marked table structure elements, so that each distinguishable depiction of marked elements should fall under the scope of the present invention. The invention is also not restricted to the propagation of the markings and the visibility of the embodiments. The direction and the depth of the propagation may be varied arbitrarily without departing from the spirit and the scope of the present invention.

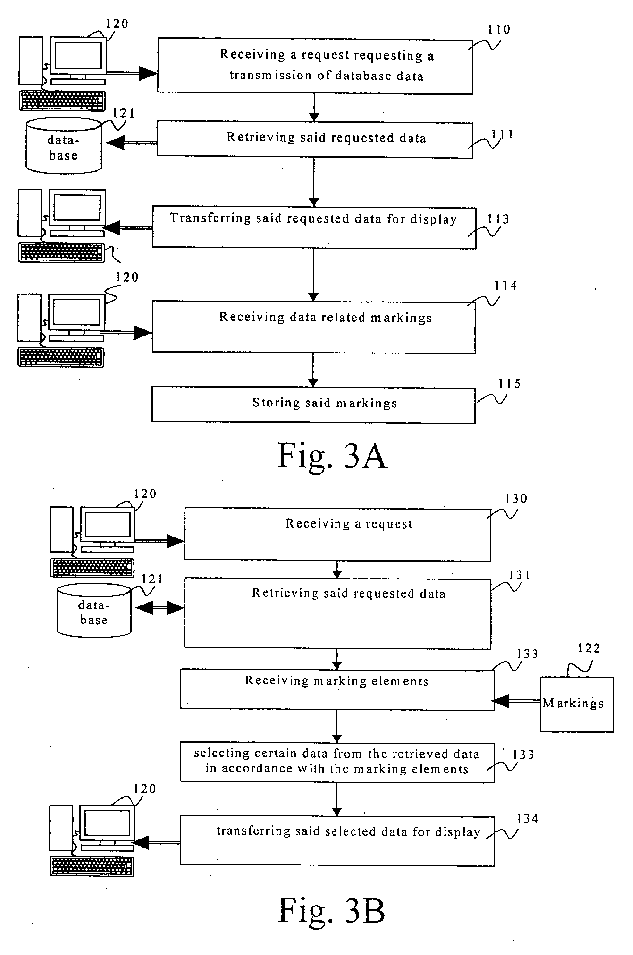

Figure 3A shows a flowchart according to one embodiment of the present invention. There are shown steps of a method for marking data elements in a database management system, wherein the method comprises
- receiving a request in step 110, said request requesting transmission of database data,
- retrieving said requested data in step 111,
- transferring said requested data for display in step 113,
- receiving data related markings in step 114,
- storing said markings in step 115.

This method may be exemplified by the following description of a realization of the method by the operation and interaction of a database 121, a server and a user device 120. In a first operation 110 the server receives a data request from a user device 120. The second operation 111 includes the retrieval of requested data from a database 121. The retrieved data are subsequently transferred from the server to the client device 120. In the fourth operation 114 the client device transfers data together with markings back to the server. Then, in step 115 the server stores the markings. The depicted procedure is used for a contact of a client device with the server, the server being able to store the markings in a dedicated marking memory (not shown), or store the markings in the database.

Fig. 3B depicts a flowchart for another embodiment of the invention comprising receiving a request in step 130, said request requesting transmission of database data,
- retrieving said database data in step 131,
- receiving marking elements in step 132,
- selecting or filtering certain data out of said retrieved data in accordance with said marking elements in step 133,
- transferring said selected data for display in step 134.

The operation of the method may be exemplified by the following description of an embodiment comprising a server, a database and a marking memory. The database may be an internal or external database which may be accessed via a server, so that the client device 120 can access pre-stored markings. As in the case of figure 3A the execution of the method starts with receiving a data request 130 from the client device 120 to the server. In the next operation 131 the server retrieves the requested data from a database 121 and checks a marking memory 122 for data related markings. If such markings can be found, the server selects in step 133 marked data and transfers them in step 134 to the client device 120.

It should be mentioned that a variation can be applied to this method without departing from the scope of the claim, so that the operation of selecting in step 133 of the data according to said markings may be executed in the client device 120, following the transmission of marking elements and data to the client device 120.

Additionally the server may first retrieve the markings and then only retrieve data that have been previously marked. This reduces the access time to the database, and prevents the waste of database access time. Further if only marked elements are transferred to the client device 120, network resources are saved.

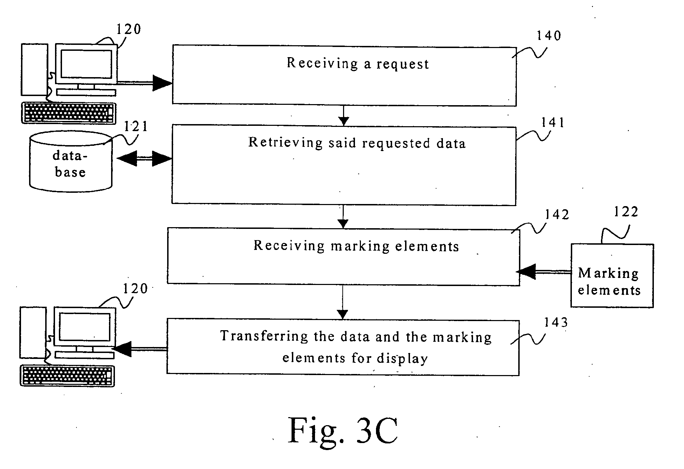

Fig. 3C depicts a flowchart for illustrating a method according to another embodiment of the invention comprising receiving a request in step 140, said request requesting transmission of database data,
- retrieving said database data in step 141,
- receiving marking elements in step 142,
- transferring said retrieved data and said received marking elements for display in step 143.

There is also depicted a realization of the method by operation of a database, a server and a client device, so that the client device 120 can access pre-stored markings. As in the case of figure 3A and 3B, the execution of the method starts with a data request received in step 140 from the client device 120 by the server. In the next operation 141 the server retrieves the requested data from said database 121 and checks a marking memory 122 for data related markings. Then the server transfers 143 the markings and the data to the client device 120.

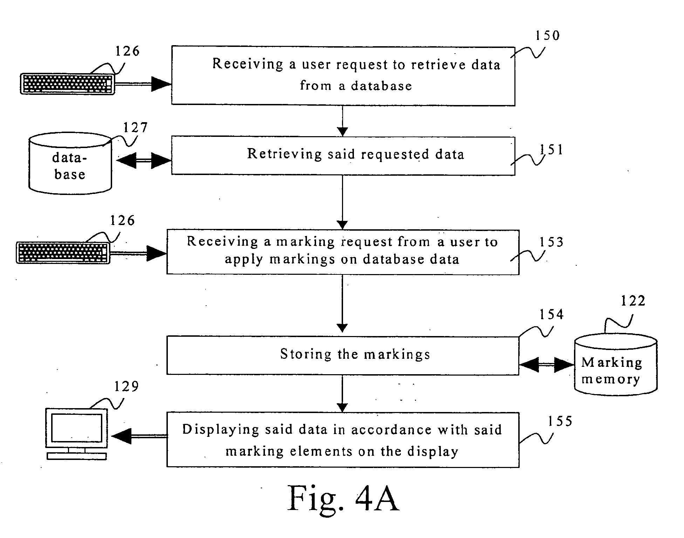

Figure 4A depicts a flowchart of a method to mark elements in a database by user input in a computer device. First, the computer device receives in step 150 a user request by user input, e.g. via a keyboard 126 to retrieve data from a database 127. Next the computer device retrieves the data from the database 127, The database 127 can be an internal or an external database connected to the computer device via a network. In a next operation 153, a user requests e.g. via a keyboard 126 to apply marks on the database data, e.g. in the table structure of a database management system. The computer device stores in step 154 the markings in a database named marking memory 122. Then the database data are displayed in step 155 in accordance with said markings on a display 129. The step of displaying the said data in accordance with the markings may include the use of marking related filters, for the depiction of the data. The procedure depicted in figure 4A is used for a marking operation in a computer or client device. The computer device may be able to store the markings in a dedicated marking memory (not shown), or store the markings in the database. The database or even the marking memory may be an internal or external database or memory. The marking memory can be incorporated in the database.

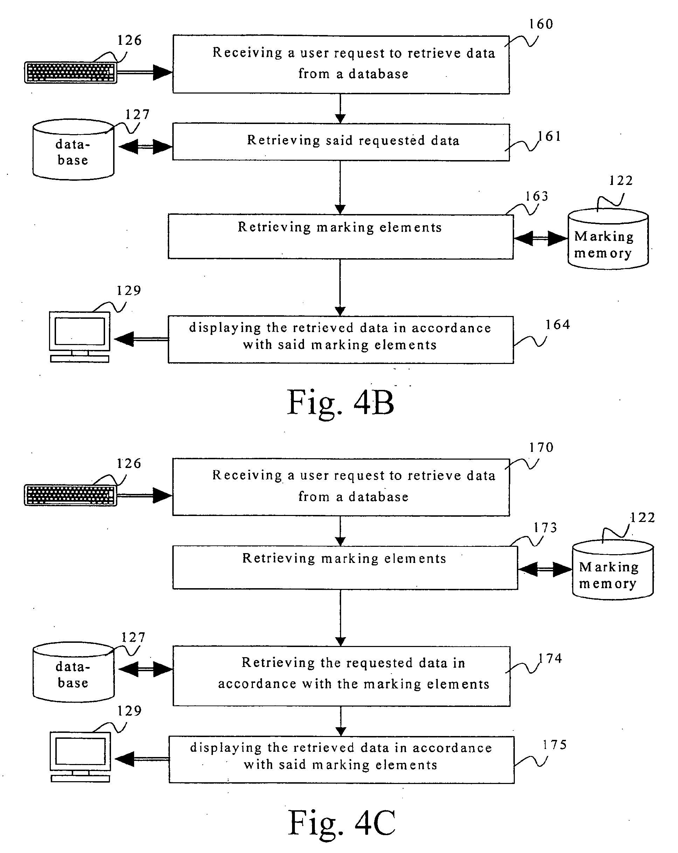

Fig. 4B depicts a flowchart for a second method for carrying out the invention in database accessed by a computer device, so that the user can access pre-stored markings. As in the case of figure 4A, the execution of the method starts with a user request 160 by user input, e.g. via a keyboard 126 to retrieve data from a database 127.
In the next operation 161 the computer device retrieves the requested data from a database 127, and in a further operation 163 checks a marking memory 122 for data related markings. If such markings can be found, the computer device depicts the retrieved data in accordance with said marking elements. This is the easiest and straightest forward way to execute the retrieving of data. It should be mentioned that the order of retrieving the data and receiving the markings may be inverted, or that both retrieving operations 161, 163 may be executed simultaneously. In step 164 the data are displayed on a display 129.

Fig. 4C depicts a flowchart for a further method of the invention embodied by operation of a database access with a computer device, so that a user or a computer device can access pre-stored markings. As in the case of figure 4A and 4B, the execution of the method starts with a data request received in step 170 via a keyboard 126 from the user. In the next operation 173 the computer device retrieves marking elements from a marking memory 122. Then the computer device retrieves in step 174 the requested data from a database 127 in accordance with the pre-retrieved markings. Then the computer device displays the retrieved data on the display 129 in step 175. This embodiment reduces the access time to the database 127 compared to the embodiment depicted in Figure 4B, and prevents the waste of database access time.

It further should be mentioned that all of the above methods enable the user, the computer device and the client not only to retrieve data and markings, but to change the markings and the data, and to store these changes.

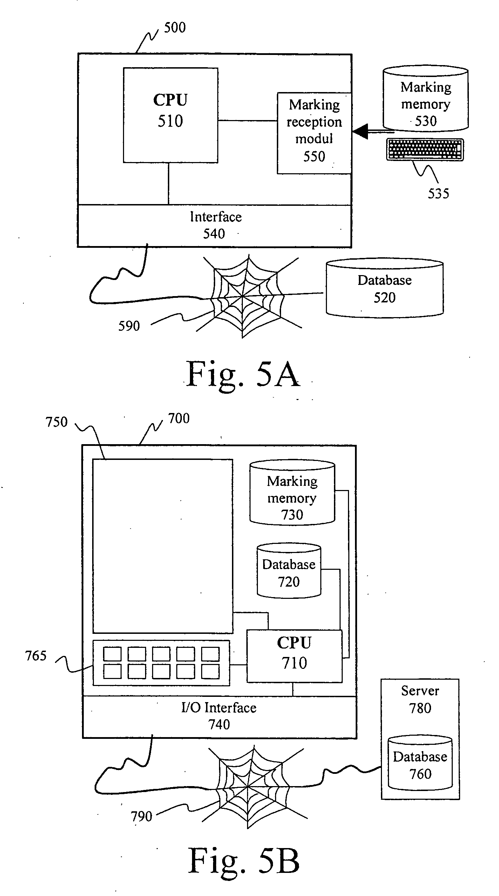

Figure 5A depicts an apparatus for marking data elements in a database management system and retrieving data for display, e.g. via a network, comprising
- an interface 540 for exchange of data, e.g. via said network,
- a module 550 for receiving marking elements,
- processing means 510 for filtering data in accordance with said marking elements.

There is also depicted a realization of the apparatus 500 according to one embodiment of the present invention. The apparatus 500 is connected via a interface 540 to a network 590. Via the network 590 the apparatus 500 can communicate with other devices (not shown) e.g. to exchange data. The network 590 can be the internet, or any other wide area, or local area network. The interface 540 is connected to a Central Processing Unit (CPU) 510, to execute the exchange and filtering of data. The CPU 510 is connected to the marking reception module 550. The marking reception module 550 can be connected to a memory such as a marking memory 530, a database for storing markings (not shown), or a user input device 535 to receive markings. The database 520 contains the data to be accessed, via said Interface 540 and said network 590. To be able to mark data in a correct way, the CPU must be able to receive the markings in said module 550 and to relate said markings with the data.

To simplify the reception of the markings, the marking memory, the database and a memory storing the users or client devices may be incorporated in a single database (not shown), on different tables interconnected by relations.

Figure 5B depicts an embodiment of the apparatus realized as a computer device 700 according to one embodiment of the present invention. The computer device 700 is depicted as a personal digital assistant (PDA), a lightweight palmtop computer. The PDA 700 comprises a display 750 and a user input device 765, to communicate with a user. The user input device 765 can be a keyboard, a keypad, a sensor element, a trackball and the like, and may be combined with the display 750 to a touch screen display. The user interaction hardware 765 is connected to the CPU 710 of the PDA 700. The CPU 710 is further connected to a marking memory 730, and a database 720, 760. The database can be an internal database 720 or an external database 760, connected to the CPU 710 via an interface 740, a network 790 and a server 780. The marking memory 730 and the user input device 765 correspond to the marking reception module of figure 5A. The CPU 710 of the PDA 700 can access and filter database data according to the methods described in the figures 4A to 4C.

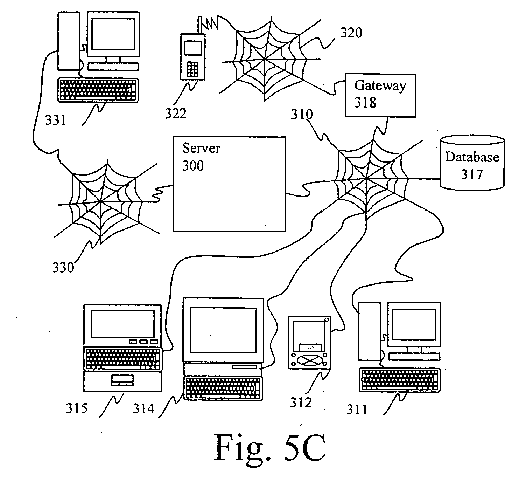

Figure 5C depicts a network system with an apparatus as described in figure 5A or 5B and at least one database for database with the apparatus. The apparatus can be a server 300 or client devices 311-316, 322, 331. The database can be the database 317, or any other database integrated in one of the client devices 311-316, 322, 331 or the server 300. The client devices are connected via networks 310, 330, 320 to the server 300. It is assumed that the server 300 contains an internal database (not shown) or can at least access an external database 317 or a database in one of the client devices 311-317, 322, 331. In the figure the server is directly connected to two networks, a local area network (LAN) 330 and a wide area network (WAN) 310. In the LAN 330 only one client is depicted, the personal computer 331. The WAN 310 is connected to a personal computer 311, a PDA 312, a browser 314, laptop 315, a database 317 and a gateway 318 to a communication network 320. The gateway 318 indirectly connects a communication device 322, e.g. a mobile telephone with computation abilities with the server 300. So all the client devices 311-317, 322, 331 are connected to the server 300. All client devices comprise user interfaces, CPUs and memories or even databases. To execute the method according to the invention the client devices 311-317, 322, 331 and/or the sever 300 must be able to access a marking memory. Thereby, the exact location of the marking memory is not important. So the database 317 may comprise the marking memory and offer the client devices 311-317, 322, 331 to store their personal marking data. Or each client device 311-317, 322, 331 comprises its own marking memory enabling them to mark data received from an internal or remote database. The method according to the invention is executable as long as a marking memory is accessible, e.g. via the network. In the simplest case the database itself or the client devices 311-317, 322, 331 themselves contain a marking memory. A very complex case would be to access a database 317 via a server 300 which is accessing distinct databases to retrieve the markings and the data.

As the data of the database are usually retrieved by a database management system (DBMS) the data source may be able to use relational algorithms between tables, as the DBMS can store the table structure e.g. in a directory table, and the markings in a related user specific marking table. So the data source of the DBMS may utilize relational algebra to generate a user specific user interface. The DBMS user interface enables the user to access the tables stored in the database. The directory elements can be marked in each hierarchic level in the directory by a user input. The user input can be a keyboard input, a mouse input and the like. In a last operation the markings are stored in the database, to be automatically retrieved if the user accesses the database with a DBMS table access user interface next time.

While the present invention has been described in connection with the embodiments thereof, it will be readily recognized by those skilled in the art that those embodiments are for exemplary purposes only without limiting the spirit and the scope of the present invention.

## Claims

1. Method for marking data elements in a database management system, wherein the method comprises
- receiving a request, said request requesting transmission of database data,
- retrieving said requested data,
- transferring said requested data for display,
- receiving data related markings,
- storing said markings.

2. Method for marking data elements in a database management system, wherein the method comprises
- receiving a request, said request requesting transmission of database data,
- retrieving said database data,
- receiving marking elements,
- selecting certain data out of said retrieved data in accordance with said marking elements,
- transferring said selected data for display.

3. Method for marking data elements in a database management system, wherein the method comprises
- receiving a request, said request requesting transmission of database data,
- retrieving said database data,
- receiving marking elements,
- transferring said retrieved data and said received marking elements for display.

4. Method for marking data elements in a database management system according to one of claims 1 to 3, wherein the method comprises:
- receiving a marking request, said marking request containing marking elements to be applied to said data,
- displaying said data in accordance with said marking elements.

5. Method for marking data elements in a database management system according to one of claims 1 to 3, wherein the method comprises:
- receiving a marking request, said marking request ordering the retrieval of marking elements,
- displaying said data in accordance with said retrieved marking elements.

6. Method according to claim 4 or 5, wherein the display of said data in accordance with said marking elements includes the sole depiction of marked data elements.

7. Method for marking data elements in a database management system, wherein the method comprises:
- retrieving said requested data from a database in accordance with said marking elements,
- displaying said retrieved data.

8. Method according to one of claims 1 to 3, further comprising processing said marking elements to propagate the marking elements or the association of the marking elements to other marking levels.

9. Method according to one of claims 1 to 3, wherein said marking elements and/or said data are retrieved from and stored in a database connected via a network.

10. Method according to one of claims 1 to 3, wherein said request for transmission of data is received from one of a client device, a server device, a computer device and a user, and said transfer of data and/or marking elements is directed to one of a client device, a server device, a computer device and a user.

11. Software tool for marking data elements, comprising program code for carrying out the steps of anyone of claims 1 to 10, when said program code is implemented in a computer program.

12. Computer program for marking data elements, comprising program code for carrying out the operations of anyone of claims 1 to 10, when said program code is run on a computer.

13. Computer program product comprising program code means stored on a computer readable medium for carrying out the method of anyone of claims 1 to 10 when said program code means is run on a computer.

14. Apparatus for marking data elements in a database management system and retrieving data for display, comprising
- an interface for exchange of data,
- a module for receiving marking elements,
- processing means for filtering data in accordance with said marking elements.

15. Apparatus according to claim 14, wherein:
- said interface is for communicating with one or more of a user, a memory and a database,
- said interface comprises means to access data of a database
- said module comprises a marking memory to store received marking elements, and
- a display means is provided for display of filtered data.

16. Apparatus according to claim 15, further comprising a database located therein.

17. Network system comprising
- at least one apparatus according to one of claims 14-16;
- at least one database for data exchange with the at least one apparatus.
